# EUROPEAN PATENT SPECIFICATION

(11) **EP 3 691 046 B1**
(45) Date of publication and mention of the grant of the patent: **01.02.2023**
(21) Application number: 19220083.0
(22) Date of filing: 30.12.2019
(51) Int. Cl.: H01R 13/52, H01R 13/506, H01R 13/6581

(54) **CONNECTOR AND WIRE HARNESS**
VERBINDER UND KABELBAUM
CONNECTEUR ET FAISCEAU DE CÂBLES

(30) Priority: 29.01.2019 JP 2019013246
(43) Date of publication of application: 05.08.2020
(73) Proprietor: YAZAKI CORPORATION, Minato-ku, Tokyo 108-8333 (JP)
(72) Inventor: TAKAGI, Akiyoshi, Kakegawa-shi, Shizuoka 437-1421 (JP); OI, Hikaru, Kakegawa-shi, Shizuoka 437-1421 (JP)
(74) Representative: Grünecker Patent- und Rechtsanwälte PartG mbB

(56) References cited:
- EP-A1- 2 866 305
- US-A1- 2015 295 363
- US-A1- 2017 279 217
- US-A1- 2018 076 561

## Description

### 1. Field of the Invention

The present invention relates to a connector and a wire harness.

### 2. Description of the Related Art

As a conventional connector, for example, Japanese Patent No. JP 6054539 A discloses a connector including a terminal, an inner housing (an inner part), a shield shell (a shielding), an outer housing (an outer part), an outer packing (an outer seal), and an inner packing (an inner seal). The terminal extends along the direction of insertion-and-extraction of the terminal, and is electrically connectable to a counterpart terminal of a counterpart device. The inner housing accommodates the terminal, and is formed of an electrical insulating synthetic resin. The shield shell is positioned outside the inner housing, and accommodates the inner housing. The outer housing is formed of an electrical insulating synthetic resin, is positioned outside the shield shell, and accommodates the shield shell.

This connector is disposed so that the outer packing and the inner packing are in contact with the counterpart device. The outer housing includes a flange. The flange and the counterpart device are fixed to each other by the fastening force of a bolt and a nut. Under a state in which the connector is attached to the counterpart device, the outer packing and the inner packing, each having compressed in the direction of insertion and extraction of the terminal, prevent water from entering into a terminal receptacle.

There is a possibility that, for example, due to vibrations generated during the running of a vehicle, force may act on a connector for vehicles, such as automobiles, in the insertion-and-extraction direction. When such force acts on a conventional connector, there is a possibility that a gap may be formed between the connector and a counterpart electronic device, and also, gaps may be formed between the counterpart device and the outer packing and between the counterpart device and the inner packing. Therefore, there is room for improvement in the waterproofness of the conventional connector.
Further prior art is known from document US 2017/0279217 A1. This document discloses an electrical plug connector for a vehicle comprising a terminal extending along an insertion-and-extraction direction, an inner housing, a shield shell positioned outside the inner housing and a unit packing annularly formed in a virtual plane perpendicular to the insertion-and-extraction direction. Furthermore, an inner packing is provided annularly formed in a virtual plane perpendicular to the insertion-and-extraction direction positioned between the shield shell and the inner housing.

### SUMMARY OF THE INVENTION

The present invention has been developed in consideration of the aforementioned situation.
An object of the invention is to provide a connector capable of securing appropriate waterproofness, and a wire harness.
The object is solved by the subject matter of claim 1.

According to another aspect of the present invention, it is preferable that the connector comprises the features of claim 2.

According to still another aspect of the present invention, in the connector, it is preferable that the outer housing includes: an outer wall extending rearward in the insertion-and-extraction direction from an inner edge of the first outer flange; and a second outer flange extending inward in the intersection direction from an edge on the rear side of the outer wall, the shield shell includes a shell wall extending toward the rear side from an inner edge of the first shell flange, and the outer packing is disposed in an outer packing holding space formed with the outer wall, the first shell flange, the shell wall, and the second outer flange.

According to still another aspect of the present invention, in the connector, it is preferable that the shield shell includes a second shell flange extending inward in the intersection direction from a rear edge of the shell wall, the inner housing includes: a first inner wall extending along the insertion-and-extraction direction; and a first inner flange extending outward in the intersection direction from an edge on the front side of the first inner wall, and the inner packing is disposed in an inner packing holding space formed with the shell wall, the second shell flange, the first inner wall, and the first inner flange.

According to still another aspect of the present invention, in the connector, it is preferable that the first outer flange of the outer housing and the first shell flange of the shield shell, or the second outer flange of the outer housing and the second shell flange of the shield shell are in contact with each other along a direction intersecting the insertion-and-extraction direction, the inner housing includes: a second inner wall extending toward the front side from an outer edge of the first inner flange; a second inner flange extending outward in the intersection direction from a front edge of the second inner wall; and a third inner flange extending inward in the intersection direction from an edge on the rear side of the first inner wall, and the second inner flange of the inner housing and the first shell flange of the shield shell, or the third inner flange of the inner housing and the second shell flange of the shield shell are in contact with each other along a direction intersecting the insertion-and-extraction direction.

According to still another aspect of the present invention, in the connector, it is preferable that the shield shell includes a spring positioned on a front side of the first shell flange, the unit packing is disposed outside the outer packing in a direction intersecting the insertion-and-extraction direction, and the spring is positioned between the counterpart device and the first shell flange, and, while compressed in the insertion-and-extraction direction, disposed inside the unit packing in the intersection direction.

In order to achieve the above mentioned object, a wire harness according to still another aspect of the present invention includes an electrically conductive wire; and the connector electrically connected to the wire, the connector including: a terminal electrically connected to the wire, extending along an insertion-and-extraction direction of the terminal, and electrically connectable to a counterpart terminal of a counterpart device; an electrical insulating inner housing configured to accommodate the terminal thereinside; a shield shell positioned outside the inner housing, and configured to accommodate the inner housing thereinside; an outer housing positioned outside the shield shell, and configured to accommodate the shield shell thereinside; a unit packing annularly formed in a virtual plane perpendicular to the insertion-and-extraction direction, and, while compressed in the insertion-and-extraction direction, positioned between the counterpart device and the outer housing; an inner packing annularly formed in a virtual plane perpendicular to the insertion-and-extraction direction, and, while compressed in an intersection direction intersecting the insertion-and-extraction direction, positioned between the shield shell and the inner housing; and an outer packing annularly formed in a virtual plane perpendicular to the insertion-and-extraction direction, and, while compressed in the intersection direction, positioned between the outer housing and the shield shell.

The above and other objects, features, advantages and technical and industrial significance of this invention will be better understood by reading the following detailed description of presently preferred embodiments of the invention, when considered in connection with the accompanying drawings.

### BRIEF DESCRIPTION OF THE DRAWINGS

FIG. 1 is a perspective view of a connector according to an embodiment of the present invention;
FIG. 2 is an exploded perspective view of a part of the connector;
FIG. 3 is an exploded perspective view of the back of the part illustrated in FIG. 2;
FIG. 4 is an exploded perspective view of a part of the connector;
FIG. 5 is an exploded perspective view of a part of the connector;
FIG. 6 is a cutaway perspective view of an inner housing;
FIG. 7 is a cutaway perspective view of a shield shell;
FIG. 8 is a cutaway perspective view of an outer housing;
FIG. 9 is a sectional view of the connector, taken along a plane including a first direction;
FIG. 10 is a sectional view of the connector, taken along a plane including a second direction;
FIG. 11 is a cutaway perspective view of an inner packing of the connector;
FIG. 12 is a cutaway perspective view of an outer packing of the connector; and
FIG. 13 is a cutaway perspective view of a unit packing of the connector.

### DETAILED DESCRIPTION OF THE PREFERRED EMBODIMENTS

Hereinafter, an embodiment of a connector according to the present invention will be described with reference to the drawings. Note that the invention is not limited by the embodiment.

### Embodiment

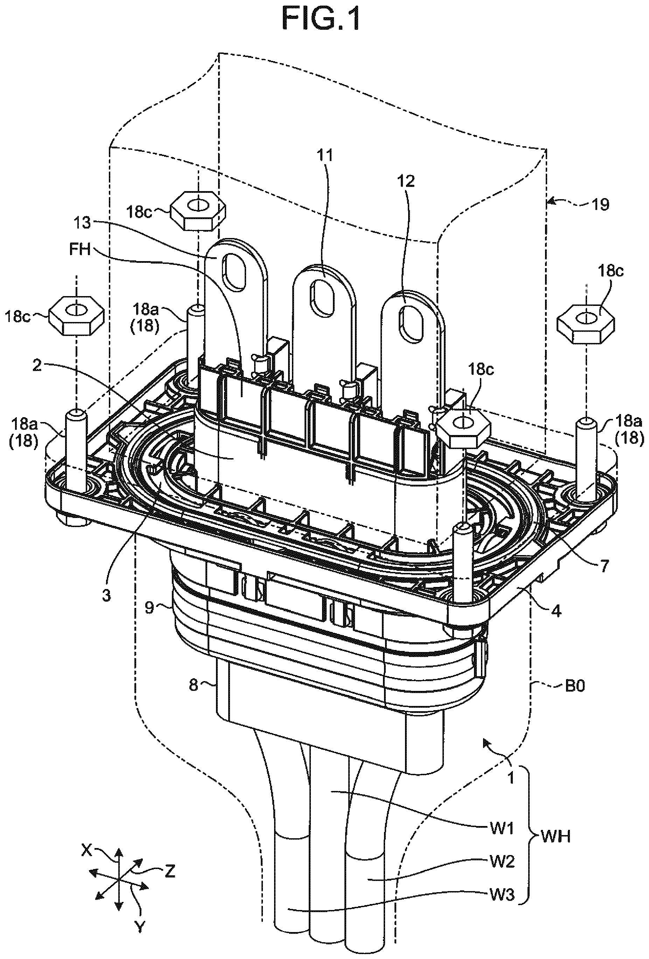

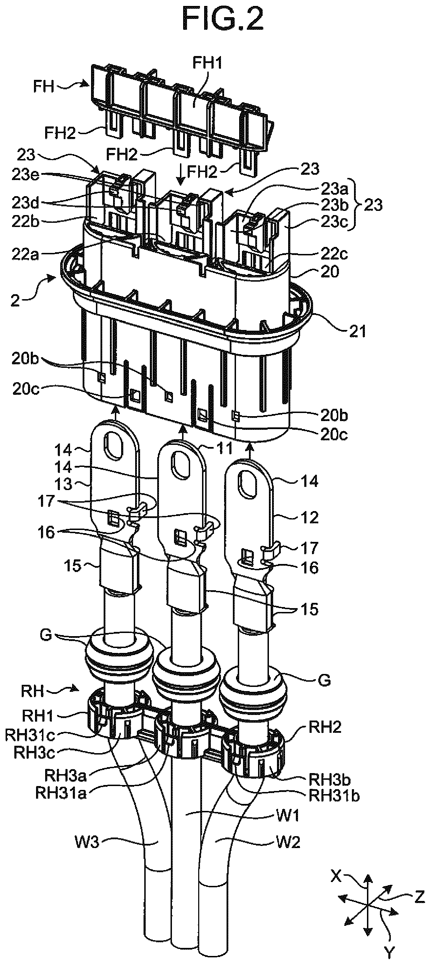

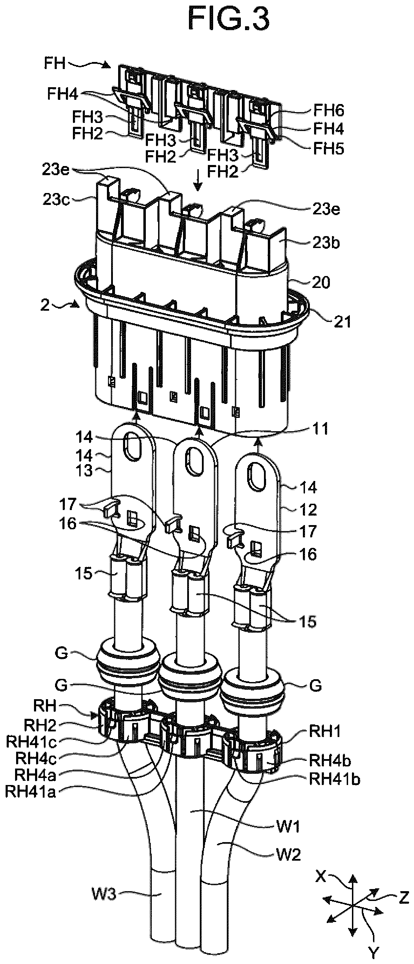

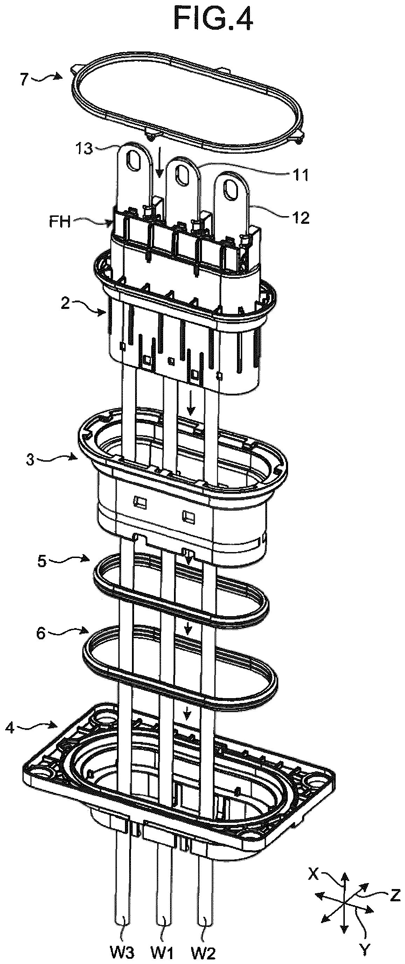

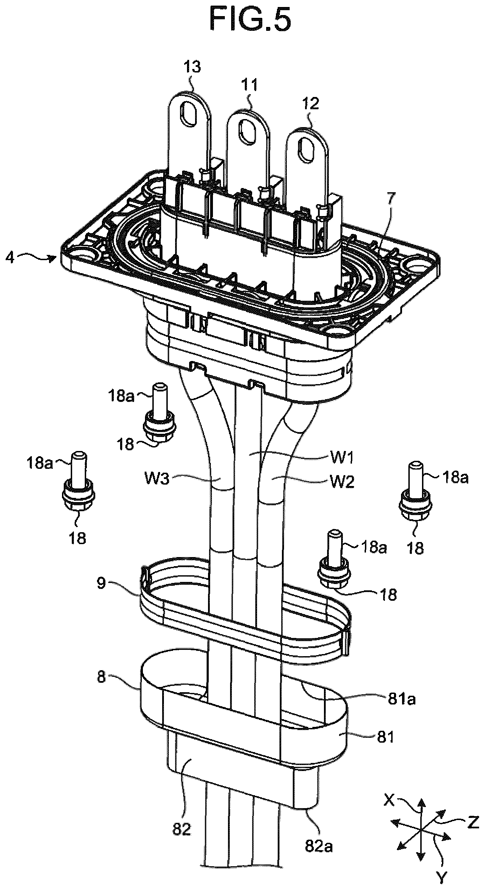

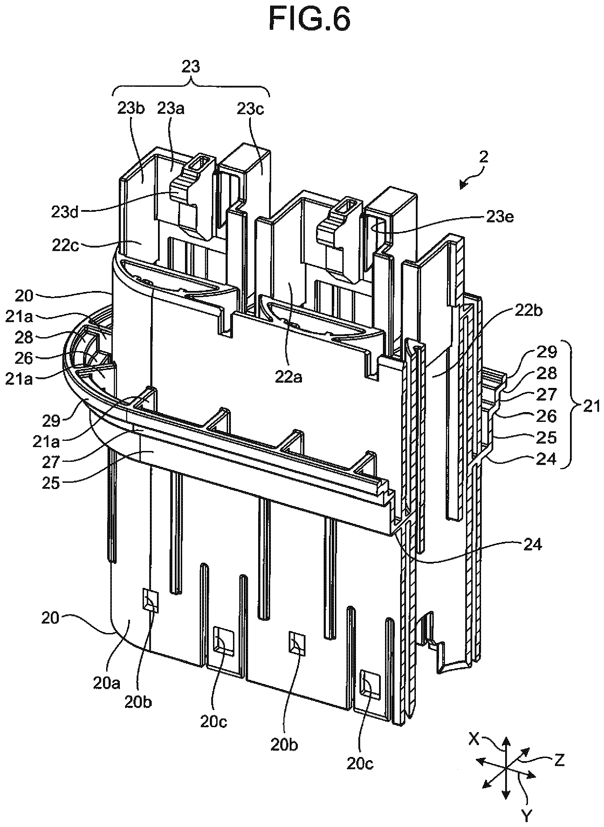

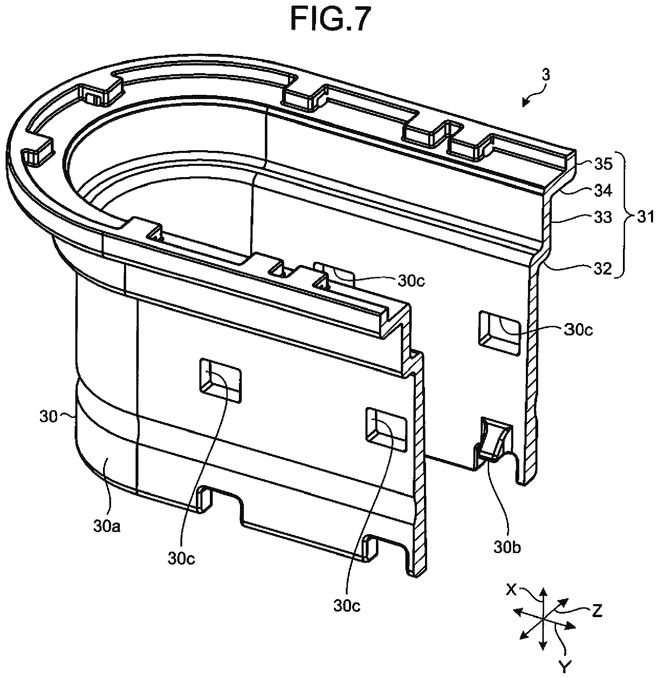

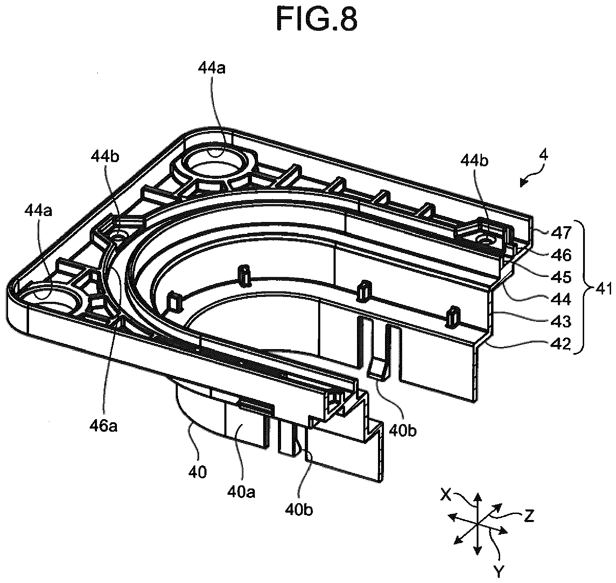

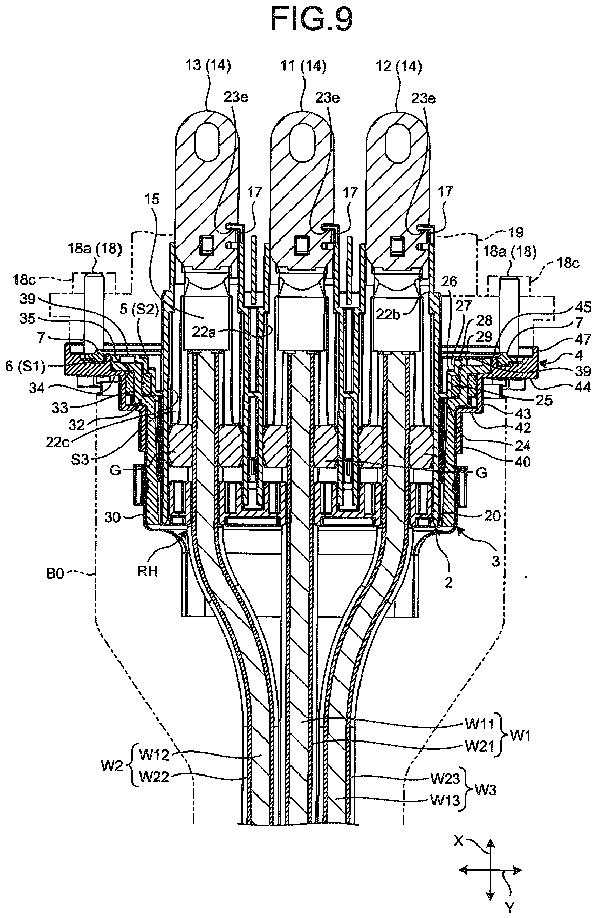

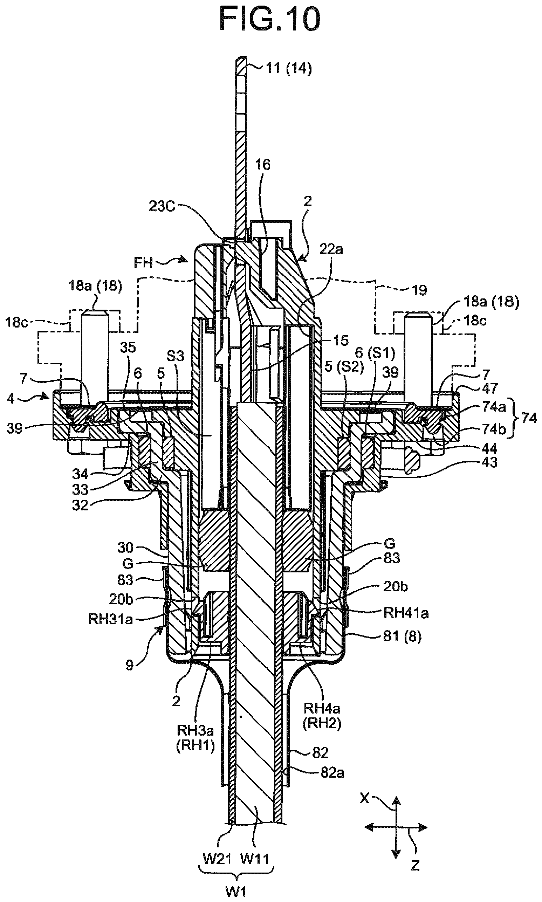

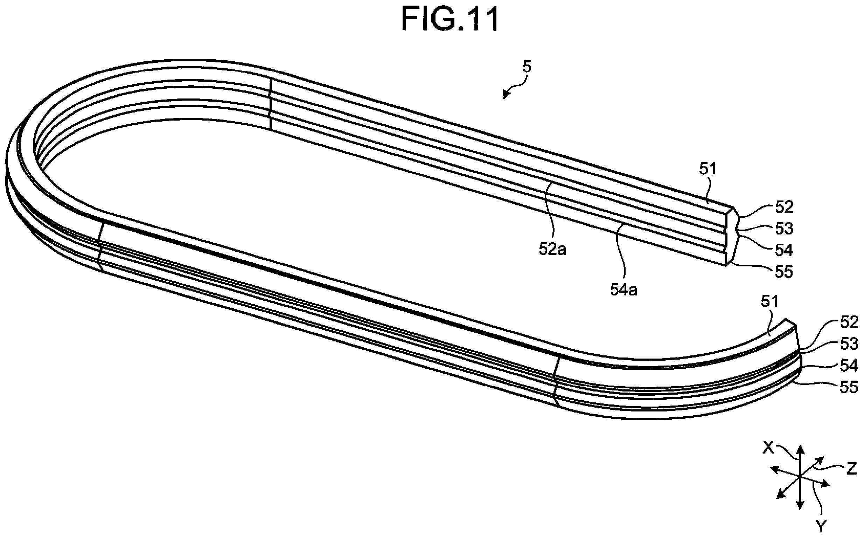

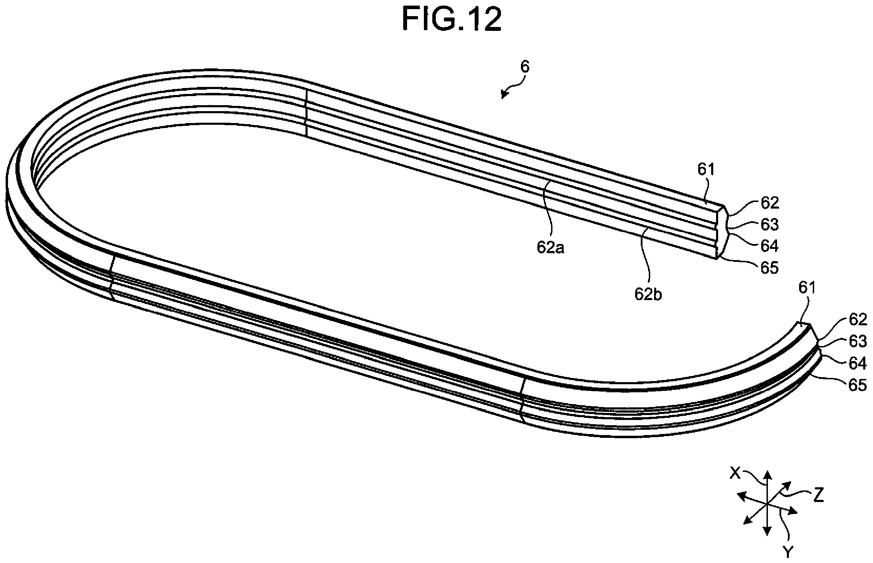

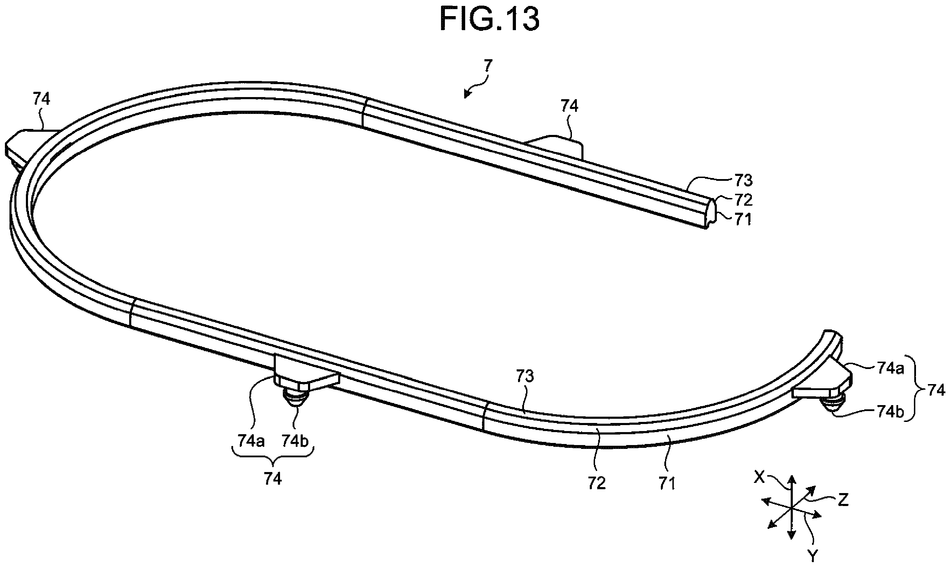

FIG. 1 is a perspective view of the connector according to the embodiment of the present invention. FIG. 2 is an exploded perspective view of a part of the connector. FIG. 3 is an exploded perspective view of the back of the part illustrated in FIG. 2. FIG. 4 is an exploded perspective view of a part of the connector. FIG. 5 is an exploded perspective view of a part of the connector. FIG. 6 is a cutaway perspective view of an inner housing. FIG. 7 is a cutaway perspective view of a shield shell. FIG. 8 is a cutaway perspective view of an outer housing. FIG. 9 is a sectional view of the connector, taken along a plane including a first direction. FIG. 10 is a sectional view of the connector, taken along a plane including a second direction. FIG. 11 is a cutaway perspective view of an inner packing of the connector. FIG. 12 is a cutaway perspective view of an outer packing of the connector. FIG. 13 is a cutaway perspective view of a unit packing of the connector.

As illustrated in FIG. 1 to FIG. 13, a direction X is the direction of insertion-and-extraction of a terminal of a connector 1 in the present embodiment. A direction Y is the first direction for the connector 1, the first direction being perpendicular to the insertion-and-extraction direction. A direction Z is the second direction for the connector 1, the second direction being perpendicular to both the insertion-and-extraction direction X and the first direction Y. In the present specification, when viewed along the insertion-and-extraction direction X, a side closer to a counterpart device 19 is sometimes referred to as a front side, and a side opposite to the counterpart device 19 is sometimes referred to as a rear side.

The connector 1 according to the present embodiment is applied to a wire harness WH for vehicles, such as automobiles, for example. The wire harness WH is configured such that, for example, in order to establish connection between devices installed in a vehicle, a plurality of wires including a first wire W1, a second wire W2, and a third wire W3 for power supply and signal communication are tied up in a bundle, and the wires are connected to the devices by the connector 1, for example.

As illustrated in FIG. 1, the wire harness WH includes the first wire W1, the second wire W2, and the third wire W3, each having electrical conductivity, and the connector 1 electrically connected to the first wire W1, the second wire W2, and the third wire W3. The wire harness WH may further include a grommet, a protector, an exterior material, and a fixture.

The connector 1 is a mechanism configured to establish electrical connection between wires and electrical devices, for example, between the first wire W1, the second wire W2, and the third wire W3 and the counterpart device 19.

As illustrated in FIG. 2 to FIG. 5, the connector 1 includes terminals 11, 12, and 13, a front holder FH, a rear holder RH, a rubber plug G, an inner housing 2, a shield shell 3, an outer housing 4, an inner packing 5, an outer packing 6, a unit packing 7, a braid 8, and a shield ring 9. The illustrated terminals 11, 12, and 13 are male terminals, and accordingly the connector 1 is a male connector. The connector 1 is engaged with a counterpart connector serving as a female connector so that electrically conductive connections between the terminals 11, 12, and 13 and counterpart terminals as female terminals accommodated in the counterpart connector are established.

As illustrated in FIG. 2 and FIG. 3, the terminals 11, 12, and 13 are formed of, for example, an electrically conductive metal in the shape of a flat plate. Each of the terminals 11, 12, and 13 is electrically connected to a corresponding one of ends of core wires W11, W12, and W13 of the wires W1, W2, and W3 constituting the wire harness WH (see FIG. 9 and FIG. 10). The terminals 11, 12, and 13 extend along the insertion-and-extraction direction X, and are electrically connectable to not-illustrated counterpart terminals of the counterpart device 19, respectively.

Each of the wires W1, W2, and W3 includes: a corresponding one of the core wires W11, W12, and W13 formed of an electrically conductive material; and a corresponding one of coatings W21, W22, and W23 with each of which a corresponding one of peripheral surfaces of the core wires W11, W12, and W13 is coated (see FIG. 9). At an end of each of the wires W1, W2, and W3, a corresponding one of the coatings W21, W22, and W23 is removed so that a corresponding one of the core wires W11, W12, and W13 is exposed (see FIG. 9).

As illustrated in FIG. 9 and FIG. 10, each of the terminals 11, 12, and 13 includes: a terminal connection part 14 to which a corresponding one of not-illustrated counterpart terminals (female terminals) of a counterpart connector (female connector) is connected; and an electric connection part 15 to which an end of a corresponding one of the core wires W11, W12, and W13 of the wires W1, W2, and W3 is connected. Before establishing connections between the terminals 11, 12, and 13 and the wires W1, W2, and W3, respectively, a worker puts the rubber plug G into each of the wires W1, W2, and W3, and subsequently connects the terminals 11, 12, and 13 to the wires W1, W2, and W3, respectively.

The inner housing 2 is formed of an electrical insulating synthetic resin in a predetermined shape. The inner housing 2 is configured to accommodate the terminals 11, 12, and 13, and, as illustrated in FIG. 6, includes an inner main body 20 and an inner protrusion 21, which are integrally formed with each other. The inner main body 20 is formed of an inner peripheral wall 20a in the shape of an approximately long cylinder so that the axis of the inner main body 20 is along the insertion-and-extraction direction X. The inner protrusion 21 is formed so as to protrude radially outward from an outer peripheral surface at the center, in the insertion-and-extraction direction X, of the inner main body 20, and, as a whole, is annularly formed so that the axis of the inner protrusion 21 is along the insertion-and-extraction direction X.

The inner main body 20 includes a first inner through hole 20b positioned on the rear side and passing through the inner peripheral wall 20a in the second direction Z. The inner main body 20 further includes a second inner through hole 20c positioned between a plurality of the first inner through holes 20b on the rear side and passing through the inner peripheral wall 20a in the second direction Z. The inner main body 20 further includes three terminal receptacles 22a, 22b, and 22c inside the inner main body 20. The terminal receptacles 22a, 22b, and 22c are configured to accommodate the terminals 11, 12, and 13, respectively.

Each of the terminal receptacles 22a, 22b, and 22c includes a hood 23 protruding toward the front side of the inner main body 20 and configured to cover a base end of each of the terminals 11, 12, and 13. Each of the hoods 23 includes: a first wall 23a configured to cover a surface on one side, in the second direction Z, of a corresponding one of the terminals 11, 12, and 13; and a pair of side walls 23b and 23c configured to cover both sides of the first wall, in the first direction Y, of a corresponding one of the terminals 11, 12, and 13.

Each of the terminal receptacles 22a, 22b, and 22c includes a first positioning projection 23d and a second positioning recess 23e which are configured to determine the positioning of a corresponding one of the terminals 11, 12, and 13. A base end of the first positioning projection 23d is positioned at the first wall 23a that is one end in the second direction Z, while a top end of the first positioning projection 23d protrudes toward the other end in the second direction Z. The first positioning projection 23d is engaged with a first positioning recess 16 of each of the terminals 11, 12, and 13 (see FIG. 2). The second positioning recess 23e is positioned on the front side of either one (for example, the side wall 23c) of the side walls 23b and 23c. The second positioning recess 23e is engaged with a second positioning projection 17 of each of the terminals 11, 12, and 13 (see FIG. 2).

The inner protrusion 21 of the inner housing 2 includes a rear inner flange 24, a rear inner wall 25, a middle inner flange 26, a middle inner wall 27, a front inner flange 28, and a front inner wall 29. The inner protrusion 21 is formed so as to have three stages formed with the inner flanges 24, 26, and 28 and the inner walls 25, 27, and 29.

The rear inner flange 24 protrudes radially outward from the outer peripheral surface of the inner main body 20, and is formed in an annular plate shape in a virtual plane perpendicular to the insertion-and-extraction direction X.

The rear inner wall 25 extends forward from the radially outward edge of the rear inner flange 24, and is formed in an annular tubular shape in a virtual plane perpendicular to the insertion-and-extraction direction X.

The middle inner flange 26 protrudes radially outward from the front edge of the rear inner wall 25, and is formed in an annular plate shape in a virtual plane perpendicular to the insertion-and-extraction direction X.

The middle inner wall 27 extends forward from the radially outward edge of the middle inner flange 26, and is formed in an annular tubular shape in a virtual plane perpendicular to the insertion-and-extraction direction X.

The front inner flange 28 protrudes radially outward from the front edge of the middle inner wall 27, and is formed in an annular plate shape in a virtual plane perpendicular to the insertion-and-extraction direction X.

The front inner wall 29 extends forward from the radially outward edge of the front inner flange 28, and is formed in an annular tubular shape in a virtual plane perpendicular to the insertion-and-extraction direction X.

Inner ribs 21a configured to couple the inner main body 20 to the inner protrusion 21 are circumferentially disposed at intervals between the inner main body 20 and the inner protrusion 21.

Before a description of the shield shell 3 is given, the front holder FH, the rubber plug G, and the rear holder RH, each being mounted onto the inner housing 2, are now described.

The front holder FH is formed of an electrical insulating synthetic resin. As illustrated in FIG. 2 and FIG. 3, the front holder FH is configured to sandwich the terminals 11, 12, and 13 in cooperation with the inner housing 2. The front holder FH includes, for example, a holder main body FH1, three approach projections FH2, and three elastic transforming parts FH4, which are integrally formed with each other.

Each of the approach projections FH2 extends rearward from the holder main body FH1 and enters into a corresponding one of terminal receptacles 22. Each of the approach projections FH2 includes a holder through hole FH3 passing through the approach projection FH2 in the second direction Z. The first positioning projection 23d of the inner housing 2 can be inserted into the holder through hole FH3.

Each of the elastic transforming parts FH4 includes a base end FH5 at a rear end of the holder main body FH1 and a top end FH6 extending from the base end FH5. The elastic transforming part FH4 can be elastically transformed. Each of the elastic transforming parts F4 is inclined to a terminal insertion direction and the second direction Z so that the base end FH5 is closer to the holder main body FH1 while the top end is more distant from the holder main body FH1.

The rubber plug G is formed of an elastic synthetic rubber. As illustrated in FIG. 9 and FIG. 10, the rubber plug G is configured to prevent water from entering into the terminal receptacles 22a, 22b, and 22c from a gap between the electric wires W1, W2, W3, and the inner housings 2 on the rear side of the inner housing 2. In cooperation with the later-described packings 5, 6, and 7, the rubber plug G forms an airtight space S3 to substantially prevent water from entering into the connector 1.

The rear holder RH is formed of an electrical insulating synthetic resin. The rear holder RH is configured to hold the electric wires W1, W2, and W3. The rear holder RH includes, for example, a first rear holder part RH1 and a second rear holder part RH2 so as to be capable of being separated into the two parts in the second direction Z.

The first rear holder part RH1 includes an arc-shaped first receptacle RH3a capable of accommodating a part of the first wire W1, an arc-shaped second receptacle RH3b capable of accommodating a part of the second wire W2, and an arc-shaped third receptacle RH3c capable of accommodating a part of the third wire W3. The first receptacle RH3a includes an engaging hook RH31a capable of being inserted into and extracted from the terminal receptacle 22a. The second receptacle RH3b includes an engaging hook RH31b capable of being inserted into and extracted from the terminal receptacle 22b. The third receptacle RH3c includes an engaging hook RH31c capable of being inserted into and extracted from the terminal receptacle 22c.

The second rear holder part RH2 includes an arc-shaped fourth receptacle RH4a capable of accommodating a part of the first wire W1, an arc-shaped fifth receptacle RH4b capable of accommodating a part of the second wire W2, and an arc-shaped sixth receptacle RH4c capable of accommodating a part of the third wire W3. The fourth receptacle RH4a includes an engaging hook RH41a capable of being inserted into and extracted from the terminal receptacle 22a. The fifth receptacle RH4b includes an engaging hook RH41b capable of being inserted into and extracted from the terminal receptacle 22b. The sixth receptacle RH4c includes an engaging hook RH41c capable of being inserted into and extracted from the terminal receptacle 22c.

The shield shell 3 is formed of an electrically conductive metal. As described later, the shield shell 3 is positioned outside the inner housing 2 and configured to accommodate the inner housing 2. As illustrated in FIG. 7, the shield shell 3 includes a shell main body 30 and a shell protrusion 31, which are integrally formed with each other. The shell main body 30 is formed of a peripheral shell wall 30a in the shape of an approximately long cylinder so that the axis of the shell main body 30 is along the insertion-and-extraction direction X. The shell protrusion 31 is formed so as to protrude radially outward from a front edge of the shell main body 30, and, as a whole, is annularly formed so that the axis of the shell protrusion 31 is along the insertion-and-extraction direction X.

The shell main body 30 includes a shell hook 30b protruding radially inward from its inner peripheral surface. The shell main body 30 further includes a shell through hole 30c passing through the peripheral shell wall 30a in the second direction Z.

The shell protrusion 31 includes a rear shell flange 32, a rear shell wall 33, a front shell flange 34, and a front shell wall 35. The shell protrusion 31 is formed so as to have two stages formed with the shell walls 33 and 35 and the shell flanges 32 and 34.

The rear shell flange 32 protrudes radially outward from the outer peripheral surface of the front edge of the shell main body 30, and is formed in an annular plate shape in a virtual plane perpendicular to the insertion-and-extraction direction X.

The rear shell wall 33 extends forward from the radially outward edge of the rear shell flange 32, and is formed in an annular tubular shape in a virtual plane perpendicular to the insertion-and-extraction direction X.

The front shell flange 34 protrudes radially outward from the front edge of the rear shell wall 33, and is formed in an annular plate shape in a virtual plane perpendicular to the insertion-and-extraction direction X.

The front shell wall 35 extends forward from the radially outward edge of the front shell flange 34, and is formed in an annular tubular shape in a virtual plane perpendicular to the insertion-and-extraction direction X.

The shield shell 3 includes a spring 39, such as a flat spring, positioned forward of the front shell flange 34 (see FIG. 9). The spring 39 is formed of an electrically conductive metal, for example, and is capable of electrically connecting the shield shell 3 to an electrically conductive target portion of the counterpart device 19.

The inner housing 2 is fit into the shield shell 3 by the engagement of the second inner through hole 20c with the shell hook 30b in a state in which the later-described inner packing 5 is sandwiched between the inner housing 2 and the shield shell 3.

The outer housing 4 in a predetermined shape is molded of an electrical insulating synthetic resin, for example. As illustrated in FIG. 9 and FIG. 10, the outer housing 4 is positioned outside the shield shell 3 and configured to accommodate the shield shell 3. As illustrated in FIG. 8, the outer housing 4 includes an outer main body 40 and an outer protrusion 41, which are integrally formed with each other. The outer main body 40 is formed of an outer peripheral wall 40a in the shape of an approximately long cylinder so that the axis of the outer main body 40 is along the insertion-and-extraction direction X. The outer protrusion 41 is formed so as to protrude radially outward from a front edge of the outer main body 40, and, as a whole, is annularly formed so that the axis of the outer protrusion 41 is along the insertion-and-extraction direction X. The outer main body 40 includes an outer hook 40b protruding radially inward from an inner peripheral surface of the outer main body 40.

The outer protrusion 41 includes a rear outer flange 42, a rear outer wall 43, a front outer flange 44, a first front outer wall 45, a second front outer wall 46, and a third front outer wall 47. The outer protrusion 41 is formed so as to have two stages formed with the outer flanges 42 and 44 and the outer walls 43 and 47.

The rear outer flange 42 protrudes radially outward from the outer peripheral surface of the front edge of the outer main body 40, and is formed in an annular plate shape in a virtual plane perpendicular to the insertion-and-extraction direction X.

The rear outer wall 43 extends forward from the radially outward edge of the rear outer flange 42, and is formed in an annular tubular shape in a virtual plane perpendicular to the insertion-and-extraction direction X.

The front outer flange 44 protrudes radially outward from the front edge of the rear outer wall 43, and is formed in the shape of an approximately rectangular plate in a virtual plane perpendicular to the insertion-and-extraction direction X. A bolt insertion hole 44a is formed at each of the four corners of the front outer flange 44.

The first front outer wall 45 extends forward from a radially outward middle portion of the front outer flange 44, and is formed in an annular tubular shape in a virtual plane perpendicular to the insertion-and-extraction direction X.

The second front outer wall 46 extends further forward from a middle portion, on the front side, of the front outer flange 44, and is formed in an annular tubular shape in a virtual plane perpendicular to the insertion-and-extraction direction X. The second front outer wall 46 is disposed at the radial outside of the first front outer wall 45.

The third front outer wall 47 extends further forward from an edge, on the front side, of the front outer flange 44, and is formed in an annular tubular shape in a virtual plane perpendicular to the insertion-and-extraction direction X. The third front outer wall 47 is disposed at the radial outside of the second front outer wall 46.

The second front outer wall 46 and the first front outer wall 45 circumferentially extend, with a predetermined space radially kept therebetween. Between the second front outer wall 46 and the first front outer wall 45, a groove 46a configured to allow the insertion of the unit packing 7 is formed.

The shield shell 3 is fit into the outer housing 4 by the engagement of the shell through hole 30c with the outer hook 40b in a state in which the later-described outer packing 6 is sandwiched between the shield shell 3 and the outer housing 4.

As illustrated in FIG. 5, the braid 8 is formed by braiding an electrically conductive metal, and thus includes a front part 81 and a rear part 82. The front part 81 is formed in the shape of an approximately long cylinder, and includes a front opening 81a at a front edge thereof. The rear part 82 is formed in the shape of an approximately long cylinder, and includes a rear opening 82a at a rear edge thereof. The braid 8 is formed so that the rear part 82 is smaller than the front part 81. As illustrated in FIG. 10, the front part 81 is positioned in the outer peripheral surface of the rear edge of the shield shell 3, and includes a lamination part 83 laminated on the shield shell 3 in a direction perpendicular to the insertion-and-extraction direction X. In the lamination part 83, the inner peripheral surface of the braid 8 and the outer peripheral surface of the shield shell 3 are electrically connected to each other.

The shield ring 9 is configured with a metal tie or crimp ring in an approximately elliptic annular shape. The shield ring 9 is positioned in the outer peripheral surface of the lamination part 83 of the braid 8, and appropriately electrically connects the braid 8 to the shield shell 3 by reducing diameter from radially outward to radially inward.

The unit packing 7 is formed of an elastic synthetic rubber. As illustrated in FIG. 13, the unit packing 7 is annularly formed in a virtual plane perpendicular to the insertion-and-extraction direction X. The unit packing 7 includes a unit main body 71, a unit inclined part 72, a unit protrusion 73, and a unit fitting projection 74.

The unit main body 71 is formed such that both sides facing each other in the second direction Z are flat and a cross section viewed from the circumferential direction is in the shape of an approximately rectangle. A recess recessed forward from the rear side is formed in the rear edge of the unit main body 71. The unit inclined part 72 protrudes forward in the insertion-and-extraction direction X from the front edge of the unit main body 71 so that the width in the second direction Z of the unit inclined part 72 is gradually reduced. The unit protrusion 73 sharply protrudes from the front edge, in the insertion-and-extraction direction X, of the unit inclined part 72.

The unit fitting projections 74 are spaced in the circumferential direction of the unit packing 7. Each of the unit fitting projections 74 includes: a projection 74a projecting in the radially outward direction of the unit main body 71; and a fitting projection 74b protruding rearward from the rear end surface of the projection 74a. The unit fitting projection 74 is fitted into a fitting recess 44b of the outer housing 4 (see FIG. 8) and configured to prevent the unit packing 7 from circumferentially rotating on the outer housing 4.

The dimensions, in the insertion-and-extraction direction X, of the unit main body 71, the unit inclined part 72, and the unit protrusion 73 are larger than the dimension, in the insertion-and-extraction direction X, of the groove 46a of the outer housing 4. Therefore, in a state in which the unit packing 7 is put in the groove 46a, the unit protrusion 73 protrudes from the front edge of the outer housing 4.

The inner packing 5 is formed of an elastic synthetic rubber. As illustrated in FIG. 11, the inner packing 5 is annularly formed in a virtual plane perpendicular to the insertion-and-extraction direction X. The inner packing 5 includes a first inner front part 51, a second inner front part 52, a first inner rear part 55, a second inner rear part 54, and an inner middle part 53, which are integrally formed with each other.

The first inner front part 51 is positioned forwardmost in the inner packing 5. The outer peripheral surface of the first inner front part 51 is formed so as to be gradually larger when closer to the rear side. The first inner rear part 55 is positioned rearwardmost in the inner packing 5. The outer peripheral surface of the first inner rear part 55 is formed so as to be gradually larger when closer to the front side. The inner peripheral surface of the first inner front part 51 and the inner peripheral surface of the first inner rear part 55 have the same radial dimension, thereby being formed flat.

The second inner front part 52 is disposed so as to be adjacent to the rear side of the first inner front part 51. The radial dimension of the outer peripheral surface of the second inner front part 52 is larger than the radial dimension of the outer peripheral surface of the first inner front part 51. The second inner front part 52 includes a protrusion 52a protruding radially inward. Hence, the radial dimension of the inner peripheral surface of the second inner front part 52 is smaller than the radial dimension of the inner peripheral surface of the first inner front part 51.

The second inner rear part 54 is disposed so as to be adjacent to the front side of the first inner rear part 55. The radial dimension of the outer peripheral surface of the second inner rear part 54 is larger than the radial dimension of the outer peripheral surface of the first inner rear part 55. The second inner rear part 54 includes, in the inner peripheral surface thereof, a protrusion 54a protruding radially inward. Hence, the radial dimension of the inner peripheral surface of the second inner rear part 54 is smaller than the radial dimension of the inner peripheral surface of the first inner rear part 55.

The inner middle part 53 is disposed between the second inner front part 52 and the second inner rear part 54. The radial dimension of the inner middle part 53 is smaller than the radial dimension of the second inner front part 52 and smaller than the radial dimension of the second inner rear part 54.

The radial dimension of the inner peripheral surface of the second inner front part 52 and the radial dimension of the inner peripheral surface of the second inner rear part 54 are slightly smaller than the radial dimension of the outer peripheral surface of the rear inner wall 25 of the inner housing 2. Thus, a worker radially stretches the inner packing 5, and then, as illustrated in FIG. 9, the inner packing 5 is disposed on the outer peripheral surface of the rear inner wall, so that the inner packing 5 comes into contact with the second inner rear part 54 by elastic shrinkage force.

The radial dimension of the outer peripheral surface of the second inner front part 52 and the radial dimension of the outer peripheral surface of the second inner rear part 54 are slightly larger than the radial dimension of the rear shell wall 33 of the shield shell 3.

The outer packing 6 is formed of an elastic synthetic rubber. As illustrated in FIG. 12, the outer packing 6 is annularly formed in a virtual plane perpendicular to the insertion-and-extraction direction X. The outer packing 6 includes a first outer front part 61, a second outer front part 62, a first outer rear part 65, a second outer rear part 64, and an outer middle part 63.

The first outer front part 61 is positioned forwardmost in the outer packing 6. The outer peripheral surface of the first outer front part 61 is formed so as to be gradually larger when closer to the rear side. The first outer rear part 65 is positioned rearwardmost in the outer packing 6. The outer peripheral surface of the first outer rear part 65 is formed so as to be gradually larger when closer to the front side. The inner peripheral surface of the first outer front part 61 and the inner peripheral surface of the first outer rear part 65 have the same radial dimension, thereby being formed flat.

The second outer front part 62 is disposed so as to be adjacent to the rear side of the first outer front part 61. The outer peripheral surface of the second outer front part 62 is larger than the outer peripheral surface of the first outer front part 61. The second outer front part 62 includes, in the inner peripheral surface thereof, a protrusion 62a protruding radially inward. Hence, the radial dimension of the inner peripheral surface of the second outer front part 62 is smaller than the radial dimension of the inner peripheral surface of the first outer front part 61.

The second outer rear part 64 is disposed so as to be adjacent to the front side of the first outer rear part 65. The outer peripheral surface of the second outer rear part 64 is larger than the outer peripheral surface of the first outer rear part 65. The second outer rear part 64 includes, in the inner peripheral surface thereof, a protrusion 64a protruding radially inward. Hence, the radial dimension of the inner peripheral surface of the second outer rear part 64 is smaller than the radial dimension of the inner peripheral surface of the first outer front part 61.

The outer middle part 63 is disposed between the second outer front part 62 and the second outer rear part 64. The radial dimension of the outer middle part 63 is smaller than the radial dimension of the second outer front part 62 and smaller than the radial dimension of the second outer rear part 64.

The radial dimension of the inner peripheral surface of the second outer front part 62 and the radial dimension of the inner peripheral surface of the second outer rear part 64 are slightly smaller than the radial dimension of the outer peripheral surface of the rear shell wall 33 of the shield shell 3. Thus, a worker radially stretches the outer packing 6, and then, as illustrated in FIG. 9, the outer packing 6 is disposed on the outer peripheral surface of the rear shell wall 33, so that the outer packing 6 comes into contact with the rear shell wall 33 by elastic shrinkage force.

The radial dimension of the outer peripheral surface of the second outer front part 62 and the radial dimension of the outer peripheral surface of the second outer rear part 64 are slightly larger than the radial dimension of the rear outer wall 43 of the outer packing 6.

Next, a way of assembling the connector 1 will be described below. First, a worker fits the rubber plugs G to the electric wires W1, W2, and W3, and crimps the terminals 11, 12, and 13 onto the ends of the electric wires W1, W2, and W3, respectively. Next, through the inner housing 2, the worker passes the terminals 11, 12, and 13 each connected by crimping onto an end of a corresponding one of the electric wires W1, W2, and W3, and mounts the terminals 11, 12, and 13 onto the inner housing 2. Specifically, as illustrated in FIG. 2 and FIG. 3, the worker engages the first positioning recess 16 of each of the terminals with a corresponding one of the first positioning projections 23d of the inner housing 2, and also engages the second positioning projection 17 of each of the terminals with a corresponding one of the second positioning recesses 23e of the inner housing 2. Subsequently, the front holder FH is mounted into the inner housing 2, and the terminals 11, 12, and 13 are sandwiched by the inner housing 2 and the front holder FH, and the terminals 11, 12, and 13 are disposed in the terminal receptacles 22a, 22b, and 22c, respectively.

Next, each of the rubber plugs G fitted to a corresponding one of the electric wires W1, W2, and W3 are pressed fit into a corresponding one of the terminal receptacles 22a, 22b, and 22c of the inner housing 2 from the rear side.

Subsequently, the worker mounts the rear holder RH onto the inner housing 2. Specifically, the worker makes the first receptacle RH3a accommodate a part of the first wire W1, makes the second receptacle RH3b accommodate a part of the second wire W2, and makes the third receptacle RH3c accommodate a part of the third wire W3, in the first rear holder part RH1. Subsequently, the worker makes the fourth receptacle RH4a accommodate a part of the first wire W1, makes the fifth receptacle RH4b accommodate a part of the second wire W2, and makes the third receptacle RH3c accommodate a part of the third wire W3, in the second rear holder part RH2.

In the above-described state, the worker moves the first rear holder part RH1 and the second rear holder part RH2 toward the front side from the rear side to press engaging hooks 31a, 31b, and 31c against the inner surface of the inner peripheral wall 20a of the inner housing 2. Thus, in the first receptacle RH3a, the engaging hook RH31a moves backward from the terminal receptacle 22a, and also, in the fourth receptacle RH4a, the engaging hook RH41a moves backward from the terminal receptacle 22a (see FIG. 10). At the same time, although not illustrated, in the second receptacle RH3b, the engaging hook RH31b moves backward from the terminal receptacle 22b, and also, in the fifth receptacle RH5b, the engaging hook RH41b moves backward from the terminal receptacle 22b. At the same time, although not illustrated, in the third receptacle RH3c, the engaging hook RH31c moves backward from the terminal receptacle 22c, and also, in the sixth receptacle RH5c, the engaging hook RH41c moves backward from the terminal receptacle 22c.

Furthermore, when the worker moves the first rear holder part RH1 and the second rear holder part RH2 toward the front side, each of the first inner through holes 20b of the inner housing 2 is engaged with a corresponding one of the engaging hooks RH31a, RH31b, RH31c, RH41a, RH41b, and RH41c. In the engagement state, the rear holder RH is fixed to the inside of the inner housing 2 (see FIG. 9 and FIG. 10). Thus, the terminals 11, 12, and 13, the electric wires W1, W2, and W3, the front holder FH, the rubber plugs G, and the rear holder RH are mounted onto the inner housing 2, so that the mounting of the subassemblies is completed.

Next, the worker attaches the inner packing 5 to the outer peripheral surface of the rear inner wall 25 of the inner housing 2. In this attachment work, by bringing the first inner front part 51 of the inner packing 5 into contact with the middle inner flange 26 of the inner housing 2, the worker can more easily effect the positioning of the inner packing 5. Furthermore, a part of an inner packing holding space S2 is formed with the rear inner wall 25 and the middle inner flange 26. Subsequently, the worker attaches the spring 39 serving as a flat spring to the front side of the front shell flange 34 of the shield shell 3, and thus the mounting of the shell subassemblies is completed.

Next, the worker attaches the shield shell 3 to the outside of the inner housing 2. When the shield shell 3 is attached to the outside of the inner housing 2, the rear shell wall 33 is positioned outside the inner packing 5, and the inner packing holding space S2 is formed with the rear inner wall 25, the middle inner flange 26, the rear shell flange 32, and the rear shell wall 33. When the worker disposes the inner packing 5 in the inner packing holding space S2, the inner peripheral surface, in the intersection direction, of the inner packing 5 is pressed radially outward by the rear inner wall 25. Furthermore, the outer peripheral surface, in the intersection direction, of the inner packing 5 is pressed radially inward by the rear shell wall 33. Thus, the inner packing 5 is compressed in the intersection direction between the shield shell 3 and the inner housing 2 (see FIG. 9 and FIG. 10).

Next, the worker attaches the outer packing 6 to the outer peripheral surface of the rear shell wall 33 of the shield shell 3. In this attachment work, by bringing the first outer front part 61 of the outer packing 6 into contact with the front shell flange 34 of the shield shell 3, the worker can more easily effect the positioning of the outer packing 6. Furthermore, a part of an outer packing holding space S1 is formed with the rear shell wall 33 and the front shell flange 34.

Next, the worker attaches the outer housing 4 to the outside of the shield shell 3. When the outer housing 4 is attached to the outside of the shield shell 3, the rear outer wall 43 is positioned outside the outer packing 6, and the outer packing holding space S1 is formed of the rear shell wall 33, the front shell flange 34, the rear outer flange 42, and the rear outer wall 43. When the worker disposes the outer packing 6 in the outer packing holding space S1, the inner peripheral surface, in the intersection direction, of the outer packing 6 is pressed radially outward by the rear shell wall 33. Furthermore, the outer peripheral surface, in the intersection direction, of the outer packing 6 is pressed radially inward by the rear outer wall 43. Thus, the outer packing 6 is compressed in the intersection direction between the shield shell 3 and the outer housing 4.

Next, the worker puts the unit packing 7 into the groove 46a of the outer housing 4. Finally, the worker inserts a screw part 18a of a bolt 18 into the bolt insertion hole 44a, and subsequently tightens the screw part 18a of the bolt 18 and a nut 18c to attach the connector 1 to the counterpart device 19 (refer to FIG. 1). The dimension, along the insertion-and-extraction direction X, of the unit packing 7 is larger than the depth of the groove 46a of the outer housing 4, and accordingly, the unit protrusion 73 positioned on the front side of the unit packing 7 is pressed rearward by the counterpart device 19. Furthermore, the unit main body 71 positioned on the rear side of the unit packing 7 is pressed forward by the outer housing 4. Accordingly, the unit packing 7 is compressed in the insertion-and-extraction direction X between the counterpart device 19 and the outer housing 4.

The connector 1 according to the embodiment and a wire harness WH each include the unit packing 7, the inner packing 5, and the outer packing 6. The unit packing 7 is annularly formed in a virtual plane perpendicular to the insertion-and-extraction direction X. While compressed in the insertion-and-extraction direction X, the unit packing 7 is positioned between a counterpart device and the outer housing 4. The inner packing 5 is annularly formed in a virtual plane perpendicular to the insertion-and-extraction direction X. While compressed in the intersection direction, the inner packing 5 is positioned between the shield shell 3 and the inner housing 2. The outer packing 6 is annularly formed in a virtual plane perpendicular to the insertion-and-extraction direction X. While compressed in the intersection direction intersecting with the insertion-and-extraction direction X, the outer packing 6 is positioned between the outer housing 4 and the shield shell 3. The connector 1 including these three packings 5, 6, and 7 can surely have appropriate waterproofness. In other words, there is a possibility that, in the case of a conventional connector, when force is applied rearward, a gap may be generated between the connector and the counterpart device. In contrast, in the connector 1, while compressed in the intersection direction intersecting with the insertion-and-extraction direction X, the inner packing 5 is positioned between the outer peripheral surface of the cylindrical rear inner wall 25 of the inner housing 2 and the inner peripheral surface of the rear shell wall 33 of the shield shell 3. This configuration can prevent a foreign substance from entering into the terminal receptacles 22a, 22b, and 22c from a gap between the shield shell 3 and the outer housing 4, even when force is applied rearward to the connector 1. Furthermore, in the connector 1, while compressed in the intersection direction intersecting with the insertion-and-extraction direction X, the outer packing 6 is positioned between the outer peripheral surface of the cylindrical rear shell wall 33 of the shield shell 3 and the inner peripheral surface of the cylindrical rear outer wall 43 of the outer housing 4. This configuration can prevent a foreign substance from entering into the terminal receptacles 22a, 22b, and 22c from a gap between the shield shell 3 and the inter housing 2, even when force is applied rearward to the connector 1. The rear outer wall 43 of the outer housing 4 is formed in the shape of a cylinder. Thus, the outer peripheral surface of the rear outer wall 43 serving as the outer peripheral surface of a sealing face can be made use of a preferable mounting surface. Therefore, a boot B0 can be easily mounted onto the outer peripheral surface of the rear outer wall of the outer housing 4 (see FIG. 1 and FIG. 6).

The outer housing 4 further includes the outer flanges 42 and 44. The shield shell 3 further includes the shell flanges 32 and 34. The outer flanges 42 and 44 are in contact with the shell flanges 32 and 34 along a direction intersecting the insertion-and-extraction direction X, respectively. Therefore, at the time of the mounting of the connector 1, when the outer housing 4 and the shield shell 3 are made closer to each other, the outer housing 4 and the shield shell 3 come into contact with each other, and thus, the positions, in the insertion-and-extraction direction X, of the outer housing 4 and the shield shell 3 are determined. Thus, the mountability of the connector 1 can be enhanced.

The outer housing 4 further includes the front outer flange 44 extending in the intersection direction. The unit packing 7 is positioned on the front side that is a side closer to the counterpart device 19 for the front outer flange 44 in the insertion-and-extraction direction X. In a state prior to the mounting of the connector 1 onto the counterpart device 19, the front side of the front outer flange 44 is exposed, and therefore, the unit packing 7 can be easily attached to the outer housing 4, whereby the mountability of the connector 1 can be enhanced. The shield shell 3 includes the front shell flange 34 extending a direction intersecting the insertion-and-extraction direction X. The outer packing 6 is positioned on the rear side that is a side opposite to the counterpart device 19 for the front shell flange 34 in the insertion-and-extraction direction X. Therefore, when the front edge (the first outer front part 61) of the outer packing 6 is brought into contact with the front shell flange 34, the position of the outer packing 6 with respect to the shield shell 3 is determined, accordingly. Thus, the mountability of the connector 1 can be enhanced.

The outer housing 4 further includes: the rear outer wall 43 extending rearward in the insertion-and-extraction direction X from the inner edge of the front outer flange 44; and the rear outer flange 42 extending inward in the intersection direction from the rear edge of the rear outer wall 43. The shield shell 3 includes the rear shell wall 33 extending rearward from the inner edge of the front shell flange 34. The outer packing 6 is disposed in the outer packing holding space S1 formed with the rear outer wall 43, the rear outer flange 42, the front shell flange 34, and the rear shell wall 33. Thus, while compressed by the rear shell wall 33 and the rear outer wall 43, the outer packing 6 can be disposed away from the counterpart device 19. Furthermore, since the rear shell wall 33 and the rear outer wall 43 extend along the insertion-and-extraction direction X, even when force is applied rearward to the connector 1, the outer packing 6 can be kept in contact with the outer housing 4 and the shield shell 3, and thus, generation of a gap between the shield shell 3 and the outer housing 4 can be substantially prevented.

The shield shell 3 further includes the rear shell flange 32 extending inward in the intersection direction from the rear edge of the rear shell wall 33. The inner housing 2 includes: the rear inner wall 25 extending in the insertion-and-extraction direction X; and the middle inner flange 26 extending outward in the intersection direction from the front edge of the rear inner wall 25. The inner packing 5 is disposed in the inner packing holding space S2 formed with the rear shell wall 33, the rear shell flange 32, the rear inner wall 25, and the middle inner flange 26. This configuration allows the inner packing 5 to be disposed away from the counterpart device 19 while compressed by the rear shell wall 33 and the rear inner wall 25. Furthermore, the rear shell wall 33 and the rear inner wall 25 extend along the insertion-and-extraction direction X, and therefore, even when force is applied rearward to the connector 1, the inner packing 5 can be kept in contact with the inner housing 2 and the shield shell 3, and thus, the generation of a gap between the shield shell 3 and the inner housing 2 can be prevented.

Furthermore, the front outer flange 44 and the front shell flange 34, or the rear outer flange 42 and the rear shell flange 32 of the outer housing 4 and the shield shell 3 are in contact with each other along a direction intersecting the insertion-and-extraction direction X. Therefore, at the time of the mounting of the connector 1, when the outer housing 4 and the shield shell 3 are made closer to each other, the outer housing 4 and the shield shell 3 come into contact with each other, whereby the positions, in the insertion-and-extraction direction X, of the outer housing 4 and the shield shell 3 are determined. Thus, the mountability of the connector 1 can be enhanced. Furthermore, when the connector 1 is mounted onto the counterpart device by using the bolt 18 and the nut 18c, the unit packing 7 and the spring 39 can be compressed in the insertion-and-extraction direction X. Thus, the workability of the mounting of the connector 1 can be further enhanced. Furthermore, the front inner flange 28 and the front shell flange 34, or the rear inner flange 24 and the rear shell flange 32 of the inner housing 2 and the shield shell 3 are in contact with each other along a direction intersecting the insertion-and-extraction direction X. Therefore, when the connector 1 is mounted onto the counterpart device by using the bolt 18 and the nut 18c, the shield shell 3 and the inner housing 2 can be pressed against the counterpart device by the outer housing 4. Thus, the workability of the mounting of the connector 1 can be further enhanced.

The shield shell 3 further includes the spring 39 positioned on the front side of the front shell flange 34. The unit packing 7 is disposed outside the outer packing 6 in a direction intersecting the insertion-and-extraction direction X. The spring 39 is positioned between the counterpart device 19 and the front shell flange 34, and disposed while compressed in the insertion-and-extraction direction X inside the unit packing 7 in the intersection direction. When the spring 39 is thus disposed, the spring 39 can be disposed inside the airtight space S3 formed with the unit packing 7. With this configuration, the connector 1 can prevent the spring 39 from coming into contact with water.

Note that, in the above-described embodiment, a male connector including the terminals 11, 12, and 13 serving as male terminals is taken as the connector 1. However, the present invention is not limited to this configuration, but may be applied to a female connector including a female terminal.

In the embodiment above, there was described the connector 1 in which the outer packing 6 was disposed in the outer packing holding space S1 formed with the rear outer wall 43, the rear outer flange 42, the front shell flange 34, and the rear shell wall 33. However, the present invention is not limited to the embodiment.

Furthermore, in the embodiment above, there was described the connector in which the inner packing 5 was disposed in the inner packing holding space S2 formed with the rear shell wall 33, the rear shell flange 32, the rear inner wall 25, and the middle inner flange 26. However, the present invention is not limited to the embodiment.

The connector and the wire harness according to the present embodiment each include the unit packing, the inner packing, and the outer packing. The unit packing is annularly formed in a virtual plane perpendicular to the insertion-and-extraction direction. While compressed in the insertion-and-extraction direction, the unit packing is positioned between a counterpart device and the outer housing. The inner packing is annularly formed in the virtual plane perpendicular to the insertion-and-extraction direction. While compressed in the intersection direction intersecting the insertion-and-extraction direction, the inner packing is positioned between the shield shell and the inner housing. The outer packing is annularly formed in a virtual plane perpendicular to the insertion-and-extraction direction. While compressed in the intersection direction, the outer packing is positioned between the outer housing and the shield shell. The connector including these three packings is capable of securing appropriate waterproofness.

## Claims

1. A connector (1) comprising:
a terminal (11, 12, 13) extending along an insertion-and-extraction direction (X) of the terminal (11, 12, 13), and electrically connectable to a counterpart terminal of a counterpart device (19);
an electrical insulating inner housing (2) configured to accommodate the terminal (11, 12, 13) thereinside;
a shield shell (3) positioned outside the inner housing (2), and configured to accommodate the inner housing (2) thereinside;
an outer housing (4) positioned outside the shield shell (3), and configured to accommodate the shield shell (3) thereinside;
a unit packing (7) annularly formed in a virtual plane perpendicular to the insertion-and-extraction direction (X), and, while compressed in the insertion-and-extraction direction (X), positioned between the counterpart device (19) and the outer housing (4);
an inner packing (5) annularly formed in a virtual plane perpendicular to the insertion-and-extraction direction (X), and, while compressed in an intersection direction intersecting the insertion-and-extraction direction (X), positioned between the shield shell (3) and the inner housing (2); and
an outer packing (6) annularly formed in a virtual plane perpendicular to the insertion-and-extraction direction (X), and, while compressed in the intersection direction, positioned between the outer housing (4) and the shield shell (3), wherein
the outer housing (4) includes a first outer flange (44) extending along the intersection direction,
the unit packing (7) is positioned on a front side, the front side being closer to the counterpart device (19) for the first outer flange (44) in the insertion-and-extraction direction (X), the shield shell (3) includes a first shell flange (34) extending along a direction intersecting the insertion-and-extraction direction (X), and
the outer packing (6) is positioned on a rear side, the rear side being opposite to the counterpart device (19) for the first shell flange (34) in the insertion-and-extraction direction (X).

2. The connector (1) according to claim 1, wherein
the outer housing (4) includes an outer wall (43) extending rearward in the insertion-and-extraction direction (X) from an inner edge of the first outer flange (44), and a second outer flange (42) extending inward in the intersection direction from an edge on the rear side of the outer wall (43),
the shield shell (3) includes a shell wall (33) extending toward the rear side from an inner edge of the first shell flange (34), and a second shell flange (32) extending inward in the intersection direction from a rear edge of the shell wall (33), and
the first outer flange (44) of the outer housing (4) and the first shell flange (34) of the shield shell (3), or the second outer flange (42) of the outer housing (4) and the second shell flange (32) of the shield shell (3) are in contact with each other along a direction intersecting the insertion-and-extraction direction (X).

3. The connector (1) according to claim 1, wherein
the outer housing (4) includes:
an outer wall (43) extending rearward in the insertion-and-extraction direction (X) from an inner edge of the first outer flange (44); and
a second outer flange (42) extending inward in the intersection direction from an edge on the rear side of the outer wall (43),
the shield shell (3) includes a shell wall (33) extending toward the rear side from an inner edge of the first shell flange (34), and
the outer packing (6) is disposed in an outer packing holding space (S1) formed with the outer wall (43), the first shell flange (34), the shell wall (33), and the second outer flange (42).

4. The connector (1) according to claim 3, wherein
the shield shell (3) includes a second shell flange (32) extending inward in the intersection direction from a rear edge of the shell wall (33),
the inner housing (2) includes:
a first inner wall (25) extending along the insertion-and-extraction direction (X); and
a first inner flange (26) extending outward in the intersection direction from an edge on the front side of the first inner wall (25), and
the inner packing (5) is disposed in an inner packing holding space (S2) formed with the shell wall (33), the second shell flange (32), the first inner wall (25), and the first inner flange (26).

5. The connector (1) according to claim 4, wherein
the first outer flange (44) of the outer housing (4) and the first shell flange (34) of the shield shell (3), or the second outer flange (42) of the outer housing (4) and the second shell flange (32) of the shield shell (3) are in contact with each other along a direction intersecting the insertion-and-extraction direction (X),
the inner housing (2) includes:
a second inner wall (27) extending toward the front side from an outer edge of the first inner flange (26);
a second inner flange (28) extending outward in the intersection direction from a front edge of the second inner wall (27); and
a third inner flange (24) extending inward in the intersection direction from an edge on the rear side of the first inner wall (25), and
the second inner flange (28) of the inner housing (2) and the first shell flange (34) of the shield shell (3), or the third inner flange (24) of the inner housing (2) and the second shell flange (32) of the shield shell (3) are in contact with each other along a direction intersecting the insertion-and-extraction direction (X).

6. The connector (1) according to claim 1, 3, 4, or 5, wherein
the shield shell (3) includes a spring (39) positioned on a front side of the first shell flange (34),
the unit packing (7) is disposed outside the outer packing (6) in a direction intersecting the insertion-and-extraction direction (X), and the spring (39) is positioned between the counterpart device (19) and the first shell flange (34), and, while compressed in the insertion-and-extraction direction (X), disposed inside the unit packing (7) in the intersection direction.

7. A wire harness (WH) comprising:
an electrically conductive wire (W11, W12 ,W13); and the connector (1) according to claim 1 electrically connected to the wire (W11, W12, W13), the connector (1) including:
a terminal (11, 12, 13) electrically connected to the wire (W11, W12, W13), extending along an insertion-and-extraction direction (X) of the terminal (11, 12, 13), and electrically connectable to a counterpart terminal of a counterpart device (19);
an electrical insulating inner housing (2) configured to accommodate the terminal (11, 12, 13) thereinside;
a shield shell (3) positioned outside the inner housing (2), and configured to accommodate the inner housing (2) thereinside;
an outer housing (4) positioned outside the shield shell (3), and configured to accommodate the shield shell (3) thereinside;
a unit packing (7) annularly formed in a virtual plane perpendicular to the insertion-and-extraction direction (X), and, while compressed in the insertion-and-extraction direction (X), positioned between the counterpart device (19) and the outer housing (4);
an inner packing (5) annularly formed in a virtual plane perpendicular to the insertion-and-extraction direction (X), and, while compressed in an intersection direction intersecting the insertion-and-extraction direction (X), positioned between the shield shell (3) and the inner housing (2); and
an outer packing (6) annularly formed in a virtual plane perpendicular to the insertion-and-extraction direction (X), and, while compressed in the intersection direction, positioned between the outer housing (4) and the shield shell (3).

## Patentansprüche

1. Ein Verbinder (1) aufweisend:
einen Anschluss (11, 12, 13), der sich entlang einer Einsetz-und-Entnahme-Richtung (X) des Anschlusses (11, 12, 13), erstreckt und der elektrisch mit einem Gegenanschlussteil eines Gegengeräts (19) verbindbar ist, ein elektrisch isolierendes Innengehäuse (2) das konfiguriert ist, um den Anschluss (11, 12, 13) darin unterzubringen, eine Abschirmschale (3), die außerhalb des Innengehäuses (2) positioniert ist und die konfiguriert ist, um das Innengehäuse darin unterzubringen, ein Außengehäuse (4), das außerhalb der Abschirmschale (3) positioniert ist und das konfiguriert ist, um die Abschirmschale (3) darin unterzubringen, eine Dichtungseinheit (7), die ringförmig in einer virtuellen Ebene rechtwinklig zu der Einsetz-und-Entnahme-Richtung (X) geformt ist, und, wenn in der Einsetz-und-Entnahme-Richtung (X) zusammengedrückt ist, zwischen dem Gegengerät (19) und dem Au-ßengehäuse (4) positioniert ist, eine innere Dichtung (5), die ringförmig in einer virtuellen Ebene rechtwinklig zu der Einsetz-und-Entnahme-Richtung (X) geformt ist, und, wenn in einer schneidenden Richtung schneidend zu der Einsetz-und-Entnahme-Richtung (X) zusammengedrückt ist, zwischen der Abschirmschale (3) und dem Innengehäuse (2) positioniert ist, und eine äußere Dichtung (6), die ringförmig in einer virtuellen Ebene rechtwinklig zu der Einsetz-und-Entnahme-Richtung (X) geformt ist, und, wenn in der schneidenden Richtung zusammengedrückt ist, zwischen dem Außengehäuse (4) und der Abschirmschale (3) positioniert ist, wobei das Außengehäuse (4) eine erste Außenflanke (44) beinhaltet, die sich entlang der schneidenden Richtung erstreckt, die Dichtungseinheit (7) an einer Vorderseite positioniert ist, die Vorderseite näher an dem Gegengerät (19) für die erste Außenflanke (44) in der Einsetz-und-Entnahme-Richtung (X) ist, die Abschirmschale (3) eine erste Schalenflanke (34) beinhaltet, die sich entlang einer Richtung schneidend mit der Einsetz-und-Entnahme-Richtung (X) erstreckt, und die äußere Dichtung (6) an einer Rückseite positioniert ist, wobei die Rückseite gegenüber dem Gegengerät (19) für die erste Schalenflanke (34) in der Einsetz-und-Entnahme-Richtung (X) ist.

2. Der Verbinder (1) gemäß Anspruch 1, wobei das Außengehäuse (4) eine Außenwand (43) hat, die sich rückwärts in der Einsetz-und-Entnahme-Richtung (X) von einer Innenkante der ersten Außenflanke (44) erstreckt, und eine zweite Außenflanke (42), die sich nach innen in der schneidenden Richtung von einer Kante an der Rückseite der Außenwand (43) erstreckt, die Abschirmschale (3) eine Schalenwand (33) beinhaltet, die sich zur Rückseite von einer Innenkante der ersten Schalenflanke (34) erstreckt, und eine zweite Schalenflanke (32), die sich nach innen in der schneidenden Richtung von einer hinteren Kante der Schalenwand (33) erstreckt, und die erste Außenflanke (44) des Außengehäuses (4) und die erste Schalenflanke (34) der Abschirmschale (3), oder die zweite Außenflanke (42) des Außengehäuses (4) und die zweite Schalenflanke (32) der Abschirmschale (3) in Kontakt miteinander entlang einer Richtung schneidend der Einsetz-und-Entnahme-Richtung (X) sind.

3. Der Verbinder (1) gemäß Anspruch 1, wobei das Außengehäuse (4) beinhaltet:
eine Außenwand (43), erstreckend rückwärts in der Einsetz-und-Entnahme-Richtung (X) von einer Innenkante der ersten Außenflanke (44), und eine zweite Außenflanke (42), die sich nach innen in der schneidenden Richtung von einer Kante an der Rückseite der Außenwand (43) erstreckt, die Außenschale (3) eine Schalenwand (33) beinhaltet, erstreckend zur Rückseite von einer Innenkante der ersten Schalenflanke (34), und die Außendichtung (6) in einem Außendichtungshalteraum (S1) gesetzt ist, der mit der Außenwand (43), der ersten Schalenflanke (34), der Schalenwand (33) und der zweiten Außenflanke (42) geformt ist.

4. Der Verbinder (1) gemäß Anspruch 3, wobei die Abschirmschale (3) eine zweite Schalenflanke (32) hat, die sich nach innen in der schneidenden Richtung von einer Hinterkante der Schalenwand (33) erstreckt, das Innengehäuse (2) beinhaltet:
eine erste Innenwand (25), erstreckend entlang der Einsetz-und-Entnahme-Richtung (X), und eine erste Innenflanke (26), erstreckend nach außen in der schneidenden Richtung von einer Kante der Vorderseite der ersten Innenwand (25), und die innere Dichtung (5) an einem Innendichtungshalteraum (S2) vorgesehen ist, der mit der Schalenwand (33), der zweiten Schalenflanke (32), der ersten Innenwand (25) und der ersten Innenflanke (26) geformt ist.

5. Der Verbinder (1) gemäß Anspruch 4, wobei die erste Außenflanke (44) des Außengehäuses (5) und die erste Schalenflanke (34) der Abschirmschale (3), oder die zweite Außenflanke (42) des Außengehäuses (4) und die zweite Schalenflanke (32) der Abschirmschale (3) in Kontakt miteinander entlang einer Richtung schneidend der Einsetz-und-Entnahme-Richtung (X) sind, das Innengehäuse (2) beinhaltet:
eine zweite Innenwand (27), erstreckend zur Vorderseite von einer Außenkante der ersten Innenflanke (26), eine zweite Innenflanke (28), erstreckend nach außen in der schneidenden Richtung von einer Vorderkante der zweiten Innenwand (27), und eine dritte Innenflanke (24), erstreckend nach innen in der schneidenden Richtung von einer Kante der Rückseite der ersten Innenwand (25), und die zweite Innenflanke (28) des Innengehäuses (2) und die erste Schalenflanke (34) der Abschirmschale (3), oder die dritte Innenflanke (24) des Innengehäuses (2) und die zweite Schalenflanke (32) der Abschirmschale (3) in Kontakt miteinander entlang einer Richtung schneidend der Einsetz-und-Entnahme-Richtung (X) sind.

6. Der Verbinder (1) gemäß einem der Ansprüche 1, 3, 4 oder 5, wobei die Abschirmschale (3) eine Feder (39) hat, die an einer Vorderseite der ersten Schalenflanke (34) positioniert ist, die Dichtungseinheit (7) außerhalb der Außendichtung (6) in einer Richtung schneidend zur Einsetz-und-Entnahme-Richtung (X) positioniert ist, und die Feder (39) zwischen dem Gegengerät (19) und der ersten Schalenflanke (34) ist, und während einer Kompression in der Einsetz-und-Entnahme-Richtung (X) innerhalb der Dichtungseinheit (7) in der schneidenden Richtung vorgesehen ist.

7. Ein Kabelbaum (WH), aufweisend:
einen elektrisch leitenden Draht (W11, W12, W13), und einen Verbinder (1) gemäß Anspruch 1, der elektrisch mit dem Draht (W11, W12, W13) verbunden ist, der Verbinder (1) weist auf:
einen Anschluss (11, 12, 13), der elektrisch mit dem Draht (W11, W12, W13) verbunden ist, der sich entlang einer Einsetz-und-Entnahme-Richtung (X) des Anschlusses (11, 12, 13) erstreckt, und elektrisch mit einem Gegenanschluss eines Gegengeräts (19) verbindbar ist, ein elektrisch isolierendes Innengehäuse (2) das konfiguriert ist, um den Anschluss (11, 12, 13) darin unterzubringen, eine Abschirmschale (3), die außerhalb des Innengehäuses (2) positioniert ist und konfiguriert ist, um das Innengehäuse (2) darin unterzubringen, ein Au-ßengehäuse (4), das außerhalb der Abschirmschale (3) positioniert ist und konfiguriert ist, um die Abschirmschale (3) darin unterzubringen, eine Dichtungseinheit (7), die ringförmig in einer virtuellen Ebene rechtwinklig zur Einsetz-und-Entnahme-Richtung (X) geformt ist, und während einer Kompression in der Einsetz-und-Entnahme-Richtung (X) zwischen dem Gegengerät (19) und dem Außengehäuse (4) positioniert ist, eine innere Dichtung (5), die ringförmig in einer virtuellen Ebene rechtwinklig zu der Einsetz-und-Entnahme-Richtung (X) geformt ist, und während einer Kompression in einer schneidenden Richtung schneidend zur Einsetz-und-Entnahme-Richtung (X) zwischen der Abschirmschale (3) und dem Innengehäuse (2) positioniert ist, und eine Außendichtung (6), die ringförmig in einer virtuellen Ebene rechtwinklig zu der Einsetz-und-Entnahme-Richtung (X) geformt ist, und während einer Kompression in der schneidenden Richtung zwischen dem Außengehäuse (4) und der Abschirmschale (3) positioniert ist.

## Revendications

1. Connecteur (1) comprenant :
une borne (11, 12, 13) s'étendant le long d'une direction insertion-et-extraction (X) de la borne (11, 12, 13), et connectable électriquement à une borne de contrepartie d'un dispositif de contrepartie (19) ;
un boîtier intérieur électrique isolant (2) configuré pour accueillir la borne (11, 12, 13) en son sein ;
une coque de blindage (3) positionnée à l'extérieur du boîtier intérieur (2), et configurée pour accueillir le boîtier intérieur (2) en son sein ;
un boîtier extérieur (4) positionné à l'extérieur de la coque de blindage (3), et configuré pour accueillir la coque de blindage (3) en son sein ;
un conditionnement d'unité (7) formé annulairement dans un plan virtuel perpendiculaire à la direction insertion-et-extraction (X), et, tandis que comprimé dans la direction insertion-et-extraction (X), positionné entre le dispositif de contrepartie (19) et le boîtier extérieur (4) ;
un conditionnement intérieur (5) formé annulairement dans un plan virtuel perpendiculaire à la direction insertion-et-extraction (X), et, tandis que comprimé dans une direction d'intersection coupant la direction insertion-et-extraction (X), positionné entre la coque de blindage (3) et le boîtier intérieur (2) ; et
un conditionnement extérieur (6) formé annulairement dans un plan virtuel perpendiculaire à la direction insertion-et-extraction (X), et, tandis que comprimé dans la direction d'intersection, positionné entre le boîtier extérieur (4) et la coque de blindage (3), dans lequel
le boîtier extérieur (4) inclut une première bride extérieure (44) s'étendant le long de la direction d'intersection,
le conditionnement d'unité (7) est positionné sur un côté avant, le côté avant étant plus proche du dispositif de contrepartie (19) pour la première bride extérieure (44) dans la direction insertion-et-extraction (X), la coque de blindage (3) inclut une première bride de coque (34) s'étendant le long d'une direction coupant la direction insertion-et-extraction (X), et
le conditionnement extérieur (6) est positionné sur un côté arrière, le côté arrière étant opposé au dispositif de contrepartie (19) pour la première bride de coque (34) dans la direction insertion-et-extraction (X).

2. Le connecteur (1) selon la revendication 1, dans lequel
le boîtier extérieur (4) inclut une paroi extérieure (43) s'étendant vers l'arrière dans la direction insertion-et-extraction (X) depuis une arête intérieure de la première bride extérieure (44), et une deuxième bride extérieure (42) s'étendant vers l'intérieur dans la direction d'intersection depuis une arête sur le côté arrière de la paroi extérieure (43),
la coque de blindage (3) inclut une paroi de coque (33) s'étendant vers le côté arrière depuis une arête intérieure de la première bride de coque (34), et une deuxième bride de coque (32) s'étendant vers l'intérieur dans la direction d'intersection depuis une arête arrière de la paroi de coque (33), et
la première bride extérieure (44) du boîtier extérieur (4) et la première bride de coque (34) de la coque de blindage (3), ou la deuxième bride extérieure (42) du boîtier extérieur (4) et la deuxième bride de coque (32) de la coque de blindage (3) sont en contact l'une avec l'autre le long d'une direction coupant la direction insertion-et-extraction (X).

3. Le connecteur (1) selon la revendication 1, dans lequel
le boîtier extérieur (4) inclut :
une paroi extérieure (43) s'étendant vers l'arrière dans la direction insertion-et-extraction (X) depuis une arête intérieure de la première bride extérieure (44) ;
et
une deuxième bride extérieure (42) s'étendant vers l'intérieur dans la direction d'intersection depuis une arête sur le côté arrière de la paroi extérieure (43),
la coque de blindage (3) inclut une paroi de coque (33) s'étendant vers le côté arrière depuis une arête intérieure de la première bride de coque (34), et
le boîtier extérieur (6) est disposé dans un espace de maintien de boîtier extérieur (S1) formé avec la paroi extérieure (43), la première bride de coque (34), la paroi de coque (33) et la deuxième bride extérieure (42) .

4. Le connecteur (1) selon la revendication 3, dans lequel
la coque de blindage (3) inclut une deuxième bride de coque (32) s'étendant vers l'intérieur dans la direction d'intersection depuis une arête arrière de la paroi de coque (33),
le boîtier intérieur (2) inclut :
une première paroi intérieure (25) s'étendant le long de la direction insertion-et-extraction (X) ; et
une première bride intérieure (26) s'étendant vers l'extérieur dans la direction d'intersection depuis une arête sur le côté avant de la première paroi intérieure (25), et
le boîtier intérieur (5) est disposé dans un espace de maintien de boîtier intérieur (S2) formé avec la paroi de coque (33), la deuxième bride de coque (32), la première paroi intérieure (25) et la première bride intérieure (26).

5. Le connecteur (1) selon la revendication 4, dans lequel
la première bride extérieure (44) du boîtier extérieur (4) et la première bride de coque (34) de la coque de blindage (3), ou la deuxième bride extérieure (42) du boîtier extérieur (4) et la deuxième bride de coque (32) de la coque de blindage (3) sont en contact l'une avec l'autre le long d'une direction coupant la direction insertion-et-extraction (X),
le boîtier intérieur (2) inclut :
une deuxième paroi intérieure (27) s'étendant vers le côté avant depuis une arête extérieure de la première bride intérieure (26) ;
une deuxième bride intérieure (28) s'étendant vers l'extérieur dans la direction d'intersection depuis une arête avant de la deuxième paroi intérieure (27) ; et
une troisième bride intérieure (24) s'étendant vers l'intérieur dans la direction d'intersection depuis une arête sur le côté arrière de la première paroi intérieure (25), et
la deuxième bride intérieure (28) du boîtier intérieur (2) et la première bride de coque (34) de la coque de blindage (3), ou la troisième bride intérieure (24) du boîtier intérieur (2) et la deuxième bride de coque (32) de la coque de blindage (3) sont en contact l'une avec l'autre le long d'une direction coupant la direction insertion-et-extraction (X).

6. Le connecteur (1) selon la revendication 1, 3, 4 ou 5, dans lequel
la coque de blindage (3) inclut un ressort (39) positionné sur un côté avant de la première bride de coque (34),
le conditionnement d'unité (7) est disposé à l'extérieur du conditionnement extérieur (6) dans une direction coupant la direction insertion-et-extraction (X), et le ressort (39) est positionné entre le dispositif de contrepartie (19) et la première bride de coque (34), et, tandis que comprimé dans la direction insertion-et-extraction (X), disposé à l'intérieur du conditionnement d'unité (7) dans la direction d'intersection.

7. Faisceau de fils (WH) comprenant :
un fil électriquement conducteur (W11, W12, W13) ; et
le connecteur (1) selon la revendication 1 connecté électriquement au fil (W11, W12, W13), le connecteur (1) incluant :
une borne (11, 12, 13) électriquement connectée au fil (W11, W12, W13), s'étendant le long d'une direction insertion-et-extraction (X) de la borne (11, 12, 13), et connectable électriquement à une borne de contrepartie d'un dispositif de contrepartie (19) ;
un boîtier intérieur électrique isolant (2) configuré pour accueillir la borne (11, 12, 13) en son sein ;
une coque de blindage (3) positionnée à l'extérieur du boîtier intérieur (2), et configurée pour accueillir le boîtier intérieur (2) en son sein ;
un boîtier extérieur (4) positionné à l'extérieur de la coque de blindage (3), et configuré pour accueillir la coque de blindage (3) en son sein ;
un conditionnement d'unité (7) formé annulairement dans un plan virtuel perpendiculaire à la direction insertion-et-extraction (X), et, tandis que comprimé dans la direction insertion-et-extraction (X), positionné entre le dispositif de contrepartie (19) et le boîtier extérieur (4) ;
un conditionnement intérieur (5) formé annulairement dans un plan virtuel perpendiculaire à la direction insertion-et-extraction (X), et, tandis que comprimé
dans une direction d'intersection coupant la direction insertion-et-extraction (X), positionné entre la coque de blindage (3) et le boîtier intérieur (2) ; et
un conditionnement extérieur (6) formé annulairement dans un plan virtuel perpendiculaire à la direction insertion-et-extraction (X), et, tandis que comprimé dans la direction d'intersection, positionné entre le boîtier extérieur (4) et la coque de blindage (3).
